# EUROPÄISCHE PATENTSCHRIFT

(11) **EP 3 146 230 B1**
(45) Veröffentlichungstag und Bekanntmachung des Hinweises auf die Patenterteilung: **24.06.2020**
(21) Anmeldenummer: 15728763.2
(22) Anmeldetag: 18.05.2015
(51) Int. Cl.: F16F 1/38, B60K 5/12

(54) **AGGREGATLAGER MIT TRAGELEMENT UND HERSTELLUNGSVERFAHREN**
UNIT BEARING HAVING A CARRYING ELEMENT, AND PRODUCTION METHOD
PALIER DE GROUPE MUNI D'UN ÉLÉMENT PORTEUR ET PROCÉDÉ DE FABRICATION

(30) Priorität: 19.05.2014 DE 102014209424
(43) Veröffentlichungstag der Anmeldung: 29.03.2017
(73) Patentinhaber: BOGE Elastmetall GmbH, 49401 Damme (DE)
(72) Erfinder: JUNG, Sven, 51503 Rösrath (DE); NELLES, Frank, 57614 Steimel (DE)
(74) Vertreter: Bossmeyer, Jörg Peter
(86) Internationale Anmeldenummer: PCT/EP2015/060852
(87) Internationale Veröffentlichungsnummer: WO 2015/177074

(56) Entgegenhaltungen:
- DE-A1- 10 127 657
- DE-A1-102006 050 070

## Beschreibung

Die Erfindung betrifft ein Aggregatlager mit einem elastomeren Lagerkörper, welcher in einem zumindest an einer Seite mit einer Öffnung versehenen, starren Lagergehäuse aufgenommen ist, wobei durch die zumindest eine Öffnung wenigstens ein Stützglied greift, welches sich an dem Lagerkörper gegen das Lagergehäuse abstützt, und wobei durch Beaufschlagung des Stützglieds verursachte Relativbewegungen des Lagerkörpers gegenüber dem Lagergehäuse entlang von drei zueinander orthogonalen Erstreckungsrichtungen des Lagerkörpers beidseits einer Ruhelage der jeweiligen Relativbewegung durch zwischen dem Lagergehäuse und dem Stützglied angeordnete elastomere Anschläge begrenzbar sind. Außerdem betrifft die Erfindung ein Verfahren zur Herstellung eines solchen Aggregatlagers.

Derartige Aggregatlager-Anordnungen sind bekannt und dienen zur Begrenzung von durch den Motor verursachten Bewegungen, die über ein Stützglied an den gegebenenfalls mehrteilig ausgebildeten Lagerkörper der Anordnung übertragen werden und an den Anlenkungen des Stützglieds mit der Karosserie die auftretenden Kräfte abgeleitet werden. Sie werden gerade in der Kraftfahrzeugtechnik insbesondere zur Lagerung des Getriebes in großen Stückzahlen eingesetzt. Einfache Ausführungsformen derartiger Lager bestehen im Wesentlichen aus einem elastomeren Lagerkörper und einem starren Lagergehäuse, welches den Lagerkörper umgibt und ihn aufnimmt. Dabei führen bei einem bestimmungsgemäßen Einsatz der Lager die jeweiligen Lagerkörper beim Betrieb eines mit ihnen ausgestatteten Fahrzeugs aufgrund der auftretenden Belastungen innerhalb des Lagergehäuses Bewegungen relativ zum Lagergehäuse aus. Diese Relativbewegungen des Lagerkörpers müssen dabei hinsichtlich des in den unterschiedlichen Richtungen jeweils ermöglichten Weges begrenzt werden, weswegen die Lager mit Anschlägen ausgestattet sind, welche durch das Lagergehäuse aufgrund einer entsprechenden Formgebung des Gehäuses oder aber zumindest an dem Lagergehäuse mittels entsprechender zusätzlicher Elemente ausgebildet werden. Die Anschläge können hierbei auch Teile eines mehrteiligen Lagerkörpers bilden. Ein gattungsgemäßes Aggregatlager ist z.B. aus der Offenlegungsschrift DE102006050070 A1 bekannt.

Für den Einsatz in der Kraftfahrzeugtechnik sind Anschläge für die Relativbewegungen des Lagerkörpers in den drei Hauptbelastungsrichtungen erforderlich. Diese Anschläge begrenzen die Bewegung des Lagerkörpers in der X-Richtung, das heißt in der Fahrzeuglängsrichtung beziehungsweise bezogen auf die Fahrtrichtung, in der Y-Richtung, das heißt quer zur Fahrzeuglängsrichtung beziehungsweise zur Fahrtrichtung, sowie in der Z-Richtung, das heißt im Hinblick auf die vertikale Erstreckung des Fahrzeugs, jeweils sowohl bezüglich des jeweiligen positiven als auch der korrespondierenden negativen Komponente des entsprechenden Richtungsvektors.

Dabei sind die Stützglieder bei den bekannten Aggregatlagern im Ganzen vorbehandelt, wobei die Vorbehandlung ein entfettendes Waschen und ein Aufrauen der Oberfläche zur Oberflächenvergrößerung durch einen Strahlvorgang, beispielsweise ein Korundstrahlen, umfasst. Anschließend werden die aus dem Stand der Technik bekannten Stützglieder an einem dafür vorgesehenen Bereich durch Vulkanisation mit Elastomermaterial beschichtet und anschließend montiert. Die hierbei durch Vulkanisation mit dem Elastomermaterial verbundene Oberfläche beträgt letzten Endes aber nur ca. 50% der Gesamtoberfläche. Während der Vorbehandlung müssen dabei Teile des betreffenden Stützgliedes so abgedeckt werden, dass die nicht zu gummierenden Flächen frei von Haftmittel sind.

Die massiven, häufig aus einem Aluminium-Druckguss bestehenden Stützglieder müssen überdies vor der Vulkanisation vorgeheizt werden, wobei alternativ auch mit verzögerter Einspritzung gearbeitet wird, um anschließend eine gleichmäßige Vernetzung bei dem aufgetragenen Elastomer zu erreichen. Die Dimensionen der Stützglieder bringen hierbei außerdem eine Reduktion der Anzahl möglicher Kavitäten innerhalb des Vulkanisationswerkzeuges mit sich.

Es ist daher die Aufgabe der vorliegenden Erfindung, ein Elastomerlager zur Verfügung zu stellen, das die vorgenannten Nachteile reduziert oder gar ganz vermeidet und derart schneller und günstiger herzustellen ist.

Diese Aufgabe wird gelöst durch ein Aggregatlager der eingangs genannten Art, bei dem zwischen dem Stützglied und den elastomeren Anschlägen des Lagerkörpers wenigstens ein gemeinsames Tragelement angeordnet ist, welches das Stützglied von allen elastomeren Anschlägen zugleich beabstandet. Durch das wenigstens eine Tragelement wird also das Stützglied von den Anschlägen tatsächlich getrennt und die Vulkanisation kann ausschließlich an dem wenigstens einen Tragelement stattfinden, so dass umgekehrt das Stützglied von der Vulkanisation ausgenommen werden kann. Dieser Umstand macht es möglich, die elastomeren Anschläge zunächst mit dem wenigstens einen Tragelement dauerhaft zu verbinden und erst dann den entstandenen Verbund mit einem Abschnitt des Stützglieds lösbar zu verbinden. Das an das Stützglied zu vulkanisierende Elastomer kann etwa zunächst auf ein Tragelement in Form einer Kunststoffträgerplatte aufgebracht werden, die anschließend zwar an dem Stützglied festgelegt, mit diesem gleichwohl lösbar verbunden ist.

Durch die beschriebene Trennung der Anschläge von dem Stützglied und deren Auftragung auf ein dafür besonders vorgesehenes Tragelement entfällt nunmehr die eingangs beschriebene Vorbehandlung (Waschen und Strahlen). Weiterhin wirkt sich zeitsparend aus, dass auf ein Vorwärmen des Stützglieds oder ein verzögertes Einspritzen verzichtet werden kann. Außerdem wird eine erhöhte Ausbringung von mit Anschlägen versehenen Stützgliedern erreicht, da in dem Vulkanisationswerkzeug eine höhere, beispielsweise die doppelte, Anzahl an Kavitäten zur Verfügung steht. Außerdem kann eine Kostenersparnis auch daher rühren, dass eine durchaus vorkommende fehlerhafte Vulkanisation nicht gleich dazu führt, dass das Stützglied zum Ausschuss wird. Die lösbare Verbindung zwischen Tragelement und Trägerplatte wirkt sich darüber hinaus im Entwicklungsprozess und hier insbesondere in der Abstimmungsphase positiv aus, da Trägerelemente mit unterschiedlichem Elastomermaterial, das beispielsweise in der Shore-Härte variiert, auf einfache Weise ausgetauscht werden können.

Weitere vorteilhafte Ausführungen des Aggregatlagers ergeben sich aus den Unteransprüchen.

Eine haltbare Verbindung zwischen Tragelement und Stützglied wird bei einer vorteilhaften Ausführung dadurch erreicht, dass das Tragelement in Gebrauchsstellung mit zumindest einem Bereich des Stützglieds mindestens einen Formschluss bildet, bei dessen Ineinandergreifen durch einen oder mehrere Bereiche des Tragelements mit solchen des Stützglieds die Lösebewegung der beiden Verbindungspartner in wenigstens eine Richtung gesperrt wird.

Erfindungsgemäß ist hierbei das Tragelement mit einem oder einer Mehrzahl Vorsprünge versehen, die in an dem Stützglied befindliche Ausnehmungen greift bzw. greifen und/oder umgekehrt. Die Umkehrung bedeutet die Ausbildung des oder der Vorsprünge an dem Stützglied.

Zweckmäßigerweise haben bei Weiterbildungen des Aggregatlagers die Vorsprünge im Querschnitt eine geometrische Form, die sich einfach realisieren lässt, die notwendigen Flächen zur Bildung des Formschlusses zur Verfügung stellt und an einem Formwerkzeug zur Herstellung von Tragelementen keine Hinterschneidungen notwendig macht. Gleichermaßen kann auf die Hinterschneidungen auch bei den Werkzeugen zur Herstellung von Stützgliedern, die beispielsweise aus einem Aluminium-Druckguss bestehen, verzichtet werden. Solche geometrischen Formen können im Querschnitt beispielsweise kreuzförmig oder dreieckig ausgebildet sein.

Bei einer bevorzugten Weiterbildung können die Vorsprünge ihren Querschnitt über ihre Erstreckung ändern, insbesondere sich in Vorspringrichtung verjüngen, so dass sie sich beispielsweise konisch in Richtung der zugehörigen Werkzeugschräge des Herstellwerkzeugs erstrecken, was die anschließende Entformung begünstigt. So können die Vorsprünge beispielsweise mit einem dreieckigen, sich in Vorspringrichtung verjüngenden Querschnitt in entsprechende Ausnehmungen eingreifen. Mit einer Mehrzahl solcher Vorsprünge, die einander benachbart angeordnet im Querschnitt etwa ein Viereck bilden, kann eine Art Wabenstruktur ausgebildet werden, bei der die mehrfache flächige Anlage der Flächen des Tragelements an denen des Stützglieds eine bessere Kraftverteilung gewährleistet. Diese Wabenstruktur oder auch eine andere geeignete Struktur kann auch eine Art Einfädelhilfe bei der Anordnung des Tragelements an dem Stützglied bilden.

Bei einer anderen, der Lösebewegung des Tragelements von dem Stützglied vorteilhaft entgegenwirkenden Ausführungsform des Aggregatlagers kann das Tragelement in Gebrauchsstellung zumindest an zwei gegenüberliegenden Seitenflächen des Stützglieds flächig anliegen und gegen diese vorgespannt sein. Hierdurch können die Seitenflächen zum einen einer Bewegung parallel zu ihrer Normalen entgegenwirken, durch die Vorspannung der Anlageflächen des Tragelements kann aber auch ein Kraftschluss gebildet sein, der eine Bewegung parallel zu der Seitenfläche des Stützglieds hemmt.

Eine Ausführungsform des Aggregatlagers kann darin bestehen, dass zumindest ein Abschnitt des Stützglieds eine im Wesentlichen viereckige Kontur aufweist und das Tragelement diesen Abschnitt an drei Seiten sowie an Eckbereichen übergreift, die eine unbedeckte Seite begrenzen, so dass bei an dem Stützglied angeordnetem Tragelement für dieses durch das Übergreifen in den Eckbereichen auch eine Art Transportsicherung gebildet ist, die das Tragelement mit den Anschlägen verliersicher an dem Stützglied hält.

Das Stützglied kann allgemein über seine Längs- und Quererstreckung mit Querschnittänderung versehen sein, die jeweils Flächen zur Bildung eines Formschlusses darstellen können.

Bei einer anderen Ausführungsform des Aggregatlagers weist das Tragelement eine dem überdeckten Abschnitt des Stützglieds entsprechende oder von dieser abweichende Kontur auf, so dass sich eine höhere Abstimm- und Variantenflexibilität durch Austausch des jeweiligen Tragelements ergeben kann, die sich wiederum auch auf die Konturen der elastomeren Anschläge auswirken kann, die ihrerseits dann flexibler gestaltbar sind. Je nach Aufbau des Stützglieds ergibt sich gegebenenfalls auch die Möglichkeit, ein Teil von dessen Körpervolumen durch das Tragelement zu ersetzen, so dass dann mit Anordnung des Tragelements in Gebrauchsstellung vorteilhaft auch eine Gewichtsreduktion einhergeht.

Zweckmäßigerweise bilden bei einer Weiterbildung des Aggregatlagers die elastomeren Anschläge einen gemeinsamen Anschlagskörper, welcher das Tragelement in Gebrauchsstellung, in welcher es mit dem Stützglied verbunden ist, vollständig einfasst. Hierbei können die jeweiligen Ränder von Anschlagskörper und Tragelement an dem Stützglied bündig abschließen. Der Anschlagskörper selbst kann hierbei als Teil des Lagerkörpers angesehen werden, an welchem sich das Stützglied gegen das Lagergehäuse abstützt.

Bei einer anderen Ausführung des Aggregatlagers kann das Tragelement aus einem thermoplastischen Kunststoff ausgebildet sein. Diese Ausführung ist vorteilhaft, insbesondere mit Blick auf eine fettfreie Produktion des Tragelements und auf ein direktes Aufbringen von Haftmittel. Auf diese Art lässt sich das Tragelement einfach und kostengünstig mittels entsprechender Werkzeuge in einem Spritzgießverfahren herstellen. Bevorzugt kann der betreffende Kunststoff aus einem Polyamid gebildet sein, das aufgrund seiner Eigenschaften mit hoher Festigkeit und Zähigkeit sowie seiner chemischen Beständigkeit einen gut geeigneten Konstruktionswerkstoff für das Tragelement bildet. Es sind aber auch andere Werkstoffe wie beispielsweise Polysulfide, Polysulfone, Polyimide oder Polyketone denkbar.

Das vorstehend erwähnte Problem wird auch gelöst durch ein Verfahren zur Herstellung eines Aggregatlagers, insbesondere eines Aggregatlagers wie es vorstehend bereits beschrieben wurde, nämlich mit einem elastomeren Lagerkörper, welcher in einem zumindest an einer Seite mit einer Öffnung versehenen, starren Lagergehäuse aufgenommen wird, wobei durch die zumindest eine Öffnung wenigstens ein Stützglied greift, welches sich an dem Lagerkörper gegen das Lagergehäuse abstützt, und wobei durch Beaufschlagung des Stützglieds verursachte Relativbewegungen des Lagerkörpers gegenüber dem Lagergehäuse entlang von drei zueinander orthogonalen Erstreckungsrichtungen des Lagerkörpers beidseits einer Ruhelage der jeweiligen Relativbewegung durch zwischen dem Lagergehäuse und dem Stützglied angeordnete elastomere Anschläge begrenzbar sind. Das betreffende Verfahren zeichnet sich dadurch aus, dass die elastomeren Anschläge zunächst mit einem Tragelement dauerhaft verbunden werden und der entstandene Verbund anschließend mit einem Abschnitt des Stützglieds lösbar verbunden wird. Hierdurch wird die Stützfunktion des Stützglieds für das Aggregat von der Tragfunktion für die elastomeren Anschläge eines oder mehrerer Anschlagkörper, die gegebenenfalls auch dem Lagerkörper des Aggregatlagers zugeordnet sein können, entkoppelt.

Bei einer vorteilhaften Variante des Verfahrens kann ein aus den elastomeren Anschlägen gebildeter Anschlagskörper unter Auftragung eines Haftmittels direkt auf das Tragelement aufgebracht werden, um anschließend vulkanisiert zu werden. Die Vulkanisation des Anschlagkörpers findet also ohne das Stützglied statt. Es ist auch denkbar, mehrere Anschläge oder Anschlagkörper in dem gleichen Vorgang an das Tragelement zu vulkanisieren.

Die Erfindung wird nachstehend anhand von Ausführungsbeispielen in der Zeichnung näher erläutert. In teilweise schematisierter Darstellung zeigen hierbei die
- Fig.1: eine perspektivische Seitenansicht eines ersten Ausführungsbeispiels mit Stützglied und oberhalb davon befindlichem Tragelement;
- Fig.2: eine perspektivische Seitenansicht eines zweiten Ausführungsbeispiels mit Stützglied und oberhalb davon befindlichem Tragelement, an welchem ein Anschlagskörper mit Anschlägen angeordnet ist;
- Fig.3: eine perspektivische Ansicht von schräg unten auf ein Ausführungsbeispiel mit einem Stützglied, oberhalb dessen ein Tragelement angeordnet ist, an dem man Vorsprünge und Ausnehmungen zum Ineinandergreifen mit komplementären Bereichen des Stützglieds erkennt;
- Fig.4: eine perspektivische Ansicht von schräg oben auf ein Tragelement aus den Fig. 1 bis 3;
- Fig.5: eine perspektivische Seitenansicht auf die Unterseite eines Tragelements aus den Fig. 1 oder 3;
- Fig.6: eine perspektivische Seitenansicht auf die Unterseite eines Tragelements aus Fig. 2.

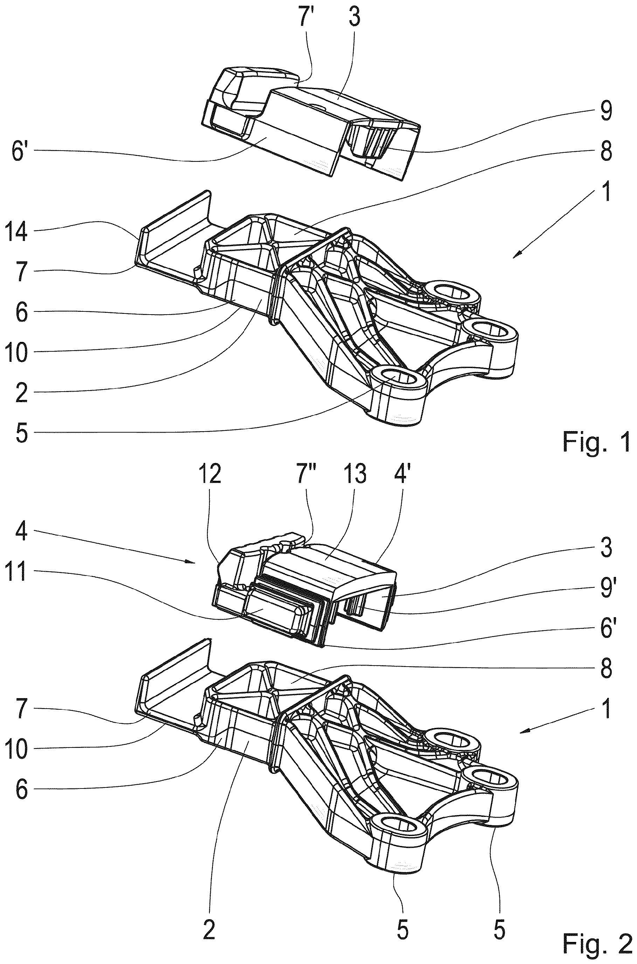

In den Fig. 1 bis 3 erkennt man die einem nicht in größerer Detailgenauigkeit dargestellten, im Ganzen mit 1 bezeichneten Aggregatlager zugeordneten Komponenten eines Stützgliedes 2 und ein aus einem thermoplastischen Kunststoff gebildetes Tragelement 3, das mit dem Stützglied 2 lösbar verbindbar ist. Nur in der Fig. 2 ist dabei ein Anschlagkörper 4' zu erkennen, der an das Tragelement 3 anvulkanisiert ist und dieses für den Betrachter erkennbar zumindest nach Vorder-, Rück- und Oberseite vollständig überdeckt und gleichzeitig einen Teil eines nicht weiter dargestellten Lagerkörpers 4 bildet, an dem sich die für den Betrachter an der unteren Seite des Stützglieds 2 befindliche Stützfläche 10 in den Fig. 1 bis 3 abstützt. Es ist also zwischen dem Stützglied 2 und den elastomeren Anschlägen 11, 12, 13 des Lagerkörpers 4, die den Anschlagkörper 4' bilden, ein gemeinsames Tragelement 3 angeordnet, welches das Stützglied 2 von allen elastomeren Anschlägen 11, 12, 13 in X-, Y-, bzw. Z-Richtung zugleich beabstandet. In zumindest einer Auslenkungsrichtung aus einer Ruhelage bezüglich der jeweiligen Bewegungsrichtung ist dabei in der Fig. 2 zumindest ein Anschlag zu erkennen, wobei der Anschlag 12 in Y-Richtung durch Eingriff eines nicht weiter dargestellten Abschnitts des ebenfalls nicht zu erkennenden Lagergehäuses die Auslenkung in beide Auslenkungsrichtungen dieser Bewegungsrichtung begrenzt. In der Fig. 2 kann man weiter erkennen, dass die elastomeren Anschläge 11, 12, 13 einen gemeinsamen Anschlagskörper 4' bilden, der das Tragelement 3 in Gebrauchsstellung nach außen vollständig einfasst.

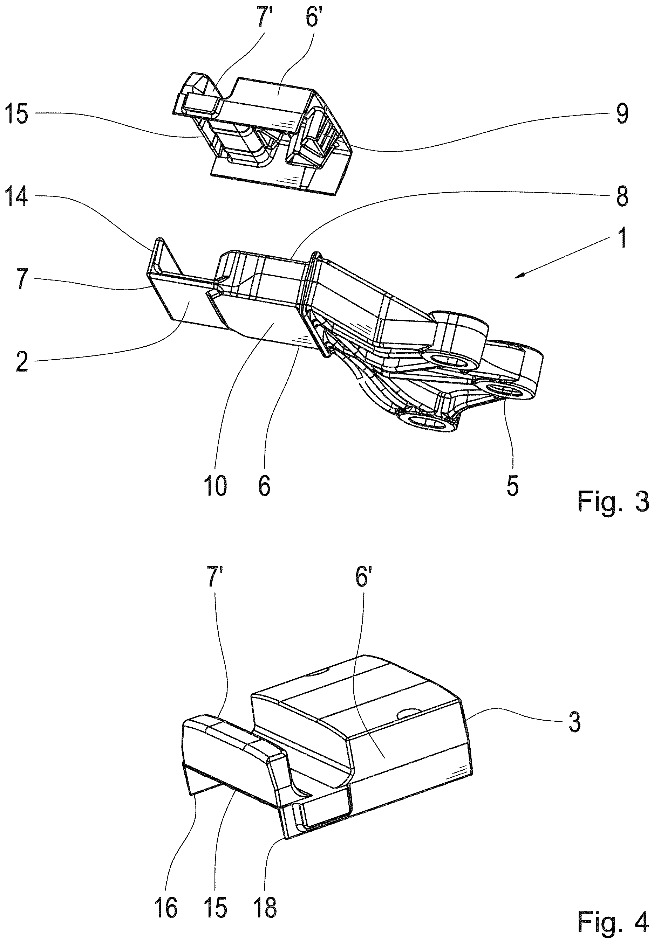

Bei Betrachtung des Stützglieds 2 in den drei Darstellungen der Fig. 1 bis 3 erkennt man in dessen für den Betrachter rechtem Abschnitt drei in etwa stirnseitige Ösen 5 zur zumindest mittelbaren Verbindung des Stützgliedes 2 mit einem Abschnitt eines nicht weiter dargestellten Aggregats, insbesondere eines Verbrennungsmotors oder einer Antriebseinheit aus Verbrennungsmoter und Getriebe. Sich in der Betrachtung nach links wendend, verjüngt sich der Querschnitt des Stützglieds 2, und geht in einen quaderförmigen Abschnitt 6 über, an dessen linker Stirnseite ein von der Seite gesehen U-Profil-artiger Abschnitt 7 das Stützglied 2 begrenzt. Der quaderförmige Abschnitt 6 weist dabei vier in einer Art Wabenstruktur zu einem Viereck gruppierte, für den Betrachter an der Oberseite des Abschnitts 6 angeordnete, dreieckige Ausnehmungen 8 auf. Diese Ausnehmungen 8 bilden Eingriffe für die an dem Tragelement 3 ausgebildeten, komplementären Vorsprünge 9, 9', die in die Ausnehmungen 8 in Gebrauchsstellung eingreifen und deren Wände mit den ihnen gegenüber benachbarten Ausnehmungswänden einen Formschluss bilden. Die Vorsprünge 9 gemäß Fig. 1 und 3 sind Pyramidenstumpf-artig ausgebildet. Das Tragelement 3 gemäß Fig. 2 weist zu diesen verschieden ausgebildete, nämlich mit einem kreuzförmigen Querschnitt versehene, in einer regelmäßigen 2 x 2 Formation gruppierte Vorsprünge 9' auf, die entsprechende Ausnehmungen an einem nicht gezeigten Stützglied 2 notwendig machen. Man erkennt überdies zum einen, dass in den Fig. 1 bis 3 die Kontur des Tragelements 3 weitgehend der Vorgabe durch das Stützglied 2 bzw. deren überdeckter Abschnitte 6, 7 folgt, wozu auch gehört, dass an der linken Stirnseite des Stützglieds 2 ein zungenförmiger, nach oben ragender Vorsprung 14 in eine komplementäre Ausnehmung 15 des Tragelements 3 greift. Auch dieser Vorsprung 14 weist eine geometrische Form, nämlich die eines Trapezes, auf, die sich per se verjüngt, und zwar hier gerade wiederum in Vorspringrichtung.

Schließlich ergibt sich aus den Fig. 1 bis 3 auch, dass ein Abschnitt 6 des Stützglieds 2 eine im Wesentlichen viereckige Kontur aufweist und das Tragelement 3 diesen Abschnitt 6 an drei Seiten sowie an Eckbereichen übergreift, die eine unbedeckte Seite begrenzen, wobei die unbedeckte Seite die Stützfläche 10 aufweist. Der unbedeckten Seite an dem Stützglied 2 gegenüberliegend greifen die Vorsprünge 9, 9' des Tragelements 3 in die Ausnehmungen 8. Hierbei liegt das Tragelement 3 in Gebrauchsstellung zumindest an zwei gegenüberliegenden Seitenflächen des Stützglieds 2 flächig an und ist gegen diese vorgespannt, so dass an den Seitenflächen des quaderförmigen Abschnitts 6 ein Kraftschluss gebildet ist.

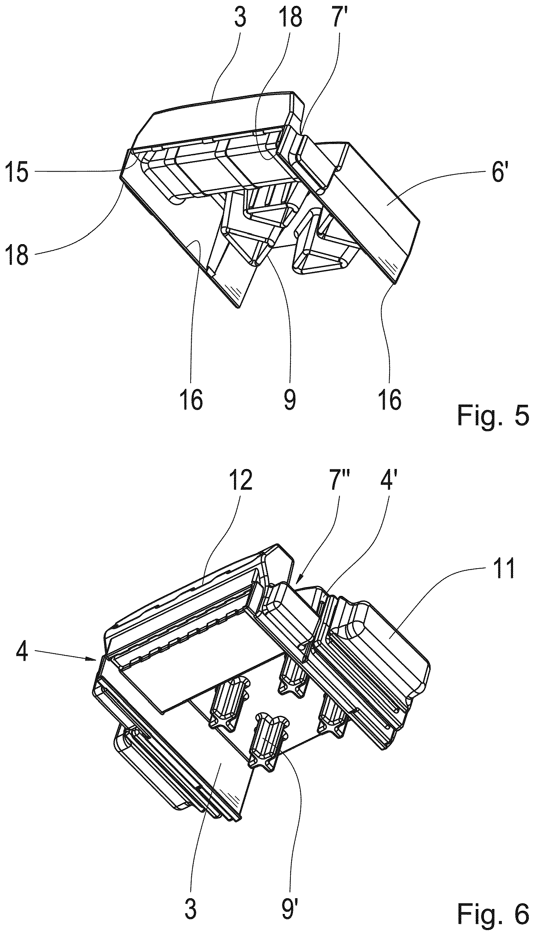

Die zu dem Tragelement 3 beschriebenen Umstände erkennt man nochmals in den Fig. 4 und 5, nämlich im Wesentlichen die beiden das Stützglied 2 einfassenden Abschnitte 6', 7' und den Eingriff 15 für den stirnseitig an dem Stützglied 2 angeordneten, in etwa quer zur Längserstreckung des Stützglieds 2 für den Betrachter nach oben vorspringenden Vorsprung 14. Genauer erkennt man in den Fig. 4 und 5, dass an den beiden unteren Enden der Seitenwangen 16 des Tragelements 3 über deren Länge Rastnasen 18 auf einander zu weisen, die die Eckbereiche des Stützglieds 2 an dessen unbedeckter Seite übergreifen.
Wie in Fig. 6 gut zu erkennen ist, sind die mit kreuzförmigem Querschnitt ausgebildeten Vorsprünge 9' einstückig mit dem Tragelement 3 verbundenen. Die gilt ebenfalls für die Pyramidenstumpf-artig ausgebildeten Vorsprünge 9 gemäß Fig. 1 und 3.

Dementsprechend betrifft die vorstehend beschriebene Erfindung ein Aggregatlager 1 mit einem elastomeren Lagerkörper 4, welcher in einem zumindest an einer Seite mit einer Öffnung versehenen, starren Lagergehäuse aufgenommen ist, wobei durch die zumindest eine Öffnung wenigstens ein Stützglied 2 greift, welches sich an dem Lagerkörper 4 gegen das Lagergehäuse abstützt, und wobei durch Beaufschlagung des Stützglieds 2 verursachte Relativbewegungen des Lagerkörpers 4, gegenüber dem Lagergehäuse entlang von drei zueinander orthogonalen Erstreckungsrichtungen X, Y, Z des Lagerkörpers 4, beidseits einer Ruhelage der jeweiligen Relativbewegung durch zwischen dem Lagergehäuse und dem Stützglied 2 angeordnete elastomere Anschläge 11, 12, 13 des Lagerkörpers 4 begrenzbar sind. Um ein Elastomerlager zur Verfügung zu haben, das bekannte Nachteile reduziert oder vermeidet und derart schneller und günstiger herzustellen ist, ist zwischen dem Stützglied 2 und den elastomeren Anschlägen 11, 12, 13 des Lagerkörpers 4, ein gemeinsames Tragelement 3 angeordnet, welches das Stützglied 2 von allen elastomeren Anschlägen 11, 12, 13 zugleich beabstandet.

### Bezugszeichen

- 1: Aggregatlager
- 2: Stützglied
- 3: Tragelement
- 4: Lagerkörper
- 4': Anschlagkörper
- 5: Öse
- 6,6',6": Abschnitt von Stützglied, Tragelement, Anschlagskörper mit jeweils in etwa quaderförmigem Querschnitt
- 7,7',7": Abschnitt von Stützglied, Tragelement, Anschlagskörper mit jeweils in etwa U-Profil-artigem Querschnitt
- 8: Ausnehmung
- 9,9': Vorsprung
- 10: Stützfläche
- 11: Anschlag in X-Richtung
- 12: Anschlag in Y-Richtung
- 13: Anschlag in Z-Richtung
- 14: stirnseitiger Vorsprung des Stützglieds
- 15: komplementärer Eingriff des Tragelements zu 14
- 16: Seitenwange des Tragelements
- 18: Rastnase

## Patentansprüche

1. Aggregatlager (1) mit einem elastomeren Lagerkörper (4), welcher in einem zumindest an einer Seite mit einer Öffnung versehenen, starren Lagergehäuse aufgenommen ist, wobei durch die zumindest eine Öffnung wenigstens ein Stützglied (2) greift, welches sich an dem Lagerkörper (4) gegen das Lagergehäuse abstützt, wobei durch Beaufschlagung des Stützglieds (2) verursachte Relativbewegungen des Lagerkörpers (4) gegenüber dem Lagergehäuse entlang von zueinander orthogonalen Erstreckungsrichtungen (X, Y, Z) des Lagerkörpers (4) beidseits einer Ruhelage der jeweiligen Relativbewegung durch zwischen dem Lagergehäuse und dem Stützglied (2) angeordnete elastomere Anschläge (11, 12, 13) des Lagerkörpers (4) begrenzbar sind, und wobei zwischen dem Stützglied (2) und den elastomeren Anschlägen (11, 12, 13) des Lagerkörpers (4) ein gemeinsames Tragelement (3) angeordnet ist, welches das Stützglied (2) von allen elastomeren Anschlägen (11, 12, 13) zugleich beabstandet, **dadurch gekennzeichnet, dass** die zueinander orthogonalen Erstreckungsrichtungen (X, Y, Z) drei zueinander orthogonale Erstreckungsrichtungen (X, Y, Z) sind und dass das Tragelement (3) mit einem oder einer Mehrzahl Vorsprünge (9, 9') versehen ist, die in an dem Stützglied (2) befindliche Ausnehmungen (8) greift bzw. greifen und/oder umgekehrt.

2. Aggregatlager nach Anspruch 1, **dadurch gekennzeichnet, dass** das Tragelement (3) in Gebrauchsstellung mit zumindest einem Bereich des Stützglieds (2) mindestens einen Formschluss bildet.

3. Aggregatlager nach Anspruch 1 oder 2, **dadurch gekennzeichnet, dass** die Vorsprünge (9, 9', 14) im Querschnitt eine geometrische Form aufweisen.

4. Aggregatlager nach einem der Ansprüche 1 bis 3, **dadurch gekennzeichnet, dass** die Vorsprünge (9, 9' 14) ihren Querschnitt über ihre Erstreckung ändern, insbesondere sich in Vorspringrichtung verjüngen.

5. Aggregatlager nach einem der Ansprüche 1 bis 4, **dadurch gekennzeichnet, dass** das Tragelement (3) in Gebrauchsstellung zumindest an zwei gegenüberliegenden Seitenflächen des Stützglieds (2) flächig anliegt und gegen diese vorgespannt ist.

6. Aggregatlager nach einem der Ansprüche 1 bis 5, **dadurch gekennzeichnet, dass** zumindest ein Abschnitt (6, 7) des Stützglieds (2) eine im Wesentlichen viereckige Kontur aufweist und das Tragelement (3) diesen Abschnitt (6, 7) an drei Seiten sowie an Eckbereichen übergreift, die eine tragelementfreie Seite des Stützglieds (2) begrenzen.

7. Aggregatlager nach einem der Ansprüche 1 bis 6, **dadurch gekennzeichnet, dass** das Tragelement (3) eine dem überdeckten Abschnitt (6, 7) des Stützglieds (2) entsprechende oder von dieser abweichende Kontur aufweist.

8. Aggregatlager nach einem der Ansprüche 1 bis 7, **dadurch gekennzeichnet, dass** die elastomeren Anschläge (11, 12, 13) einen gemeinsamen Anschlagskörper (4') bilden, welcher das Tragelement (3) in Gebrauchsstellung nach außen vollständig einfasst.

9. Aggregatlager nach einem der Ansprüche 1 bis 8, **dadurch gekennzeichnet, dass** das Tragelement (3) aus einem thermoplastischen Kunststoff ausgebildet ist.

## Claims

1. Engine mount (1) with an elastomer mount body (4) which is received in a rigid mount housing provided at least on one side with an opening, wherein at least one support member (2) engages through the at least one opening, which is supported on the mount body (4) against the mount housing, wherein relative movements of the mount body (4), caused by impact of the support member (2), with respect to the mount housing along extension directions (X, Y, Z) of the mount body (4), which are orthogonal to one another, on both sides of a rest position of the respective relative movement are delimitable by elastomer stops (11, 12, 13) of the mount body (4) arranged between the mount housing and the support member (2), and wherein a common bearing element (3) is arranged between the support member (2) and the elastomer stops (11, 12, 13) of the mount body (4), which also distances the support member (2) from all elastomer stops (11, 12, 13), **characterised in that** the extension directions (X, Y, Z), which are orthogonal to one another, are three extension directions (X, Y, Z) orthogonal to one another and **in that** the bearing element (3) is provided with one or a plurality of projections (9, 9') which engages or engage into recesses (8) located on the support member (2) and/or vice versa.

2. Engine mount according to claim 1, **characterised in that** the bearing element (3), in the position of use, forms at least one positive-locking connection with at least one region of the support member (2).

3. Engine mount according to claim 1 or 2, **characterised in that** the projections (9, 9', 14) have a geometric shape in their cross-section.

4. Engine mount according to any one of claims 1 to 3, **characterised in that** the projections (9, 9', 14) change their cross-section over their extension, in particular they taper in the projecting direction.

5. Engine mount according to any one of claims 1 to 4, **characterised in that** the bearing element (3), in the position of use, abuts extensively at least on two opposing lateral surfaces of the support member (2) and is pretensioned against them.

6. Engine mount according to any one of claims 1 to 5, **characterised in that** at least one section (6, 7) of the support member (2) has a substantially rectangular contour and the bearing element (3) overlaps this section (6, 7) at three sides and at corner regions which delimit a side of the support member (2) without a bearing element.

7. Engine mount according to any one of claims 1 to 6, **characterised in that** the bearing element (3) has a contour corresponding to the covered section (6, 7) of the support member (2) or deviating therefrom.

8. Engine mount according to any one of claims 1 to 7, **characterised in that** the elastomer stops (11, 12, 13) form a common stop body (4') which fully outwardly surrounds the bearing element (3) in the position of use.

9. Engine mount according to any one of claims 1 to 8, **characterised in that** the bearing element (3) is formed of a thermoplastic material.

## Revendications

1. Palier d'agrégat (1) avec un corps de palier élastomère (4), qui est logé dans un boîtier de palier rigide muni, au moins sur un côté, d'une ouverture, dans lequel, à travers l'au moins une ouverture, au moins un organe d'appui (2) s'emboîte, qui s'appuie au niveau du corps de palier (4) contre le boîtier de palier, dans lequel les mouvements relatifs provoqués grâce à une sollicitation de l'organe d'appui (4)par rapport au boîtier de palier, le long de directions d'extension (X, Y, Z), orthogonales entre elles, du corps de palier (4) des deux côtés d'une position de repos du mouvement relatif respectif, peuvent être limités par des butées élastomères (11, 12, 13) du corps de palier (4), disposées entre le boîtier de palier et l'organe d'appui (2) et dans lequel, entre l'organe d'appui (2) et les butées élastomères (11, 12, 13) du corps de palier, est disposé un élément porteur commun (3) qui écarte l'organe d'appui (2) de toutes les butées élastomères (11, 12, 13) en même temps, **caractérisé en ce que** les directions d'extension orthogonales entre elles (X, Y, Z) sont trois directions d'extension orthogonales entre elles (X, Y, Z), et **en ce que** l'élément porteur (3) est muni d'une ou d'une pluralité de saillies (9, 9') qui s'emboîte(nt) dans des évidements (8) se trouvant sur l'organe d'appui (2) ou inversement.

2. Palier d'agrégat selon la revendication 1, **caractérisé en ce que** l'élément porteur (3) forme, dans la position d'utilisation avec au moins une partie de l'organe d'appui (2), au moins une complémentarité de forme.

3. Palier d'agrégat selon la revendication 1 ou 2, **caractérisé en ce que** les saillies (9, 9', 14) présentent une section transversale de forme géométrique.

4. Palier d'agrégat selon l'une des revendications 1 à 3, **caractérisé en ce que** les saillies (9, 9', 14) changent de section transversale sur leur extension, plus particulièrement se rétrécissent dans la direction de saillie.

5. Palier d'agrégat selon l'une des revendications 1 à 4, **caractérisé en ce que** l'élément porteur (3) s'appuie, dans la position d'utilisation, au moins contre deux surfaces latérales opposées de l'organe d'appui (2) sur toute la surface et est précontraint contre celles-ci.

6. Palier d'agrégat selon l'une des revendications 1 à 5, **caractérisé en ce qu'**au moins une portion (6, 7) de l'organe d'appui (2) présente un contour globalement quadrangulaire et l'élément porteur (3) entoure cette portion (6, 7) sur trois côtés ainsi qu'au niveau des angles qui limitent un côté sans élément porteur de l'organe d'appui (2).

7. Palier d'agrégat selon l'une des revendications 1 à 6, **caractérisé en ce que** l'élément porteur (3) présente un contour correspondant à la portion (6, 7) recouverte de l'organe d'appui (2) ou un contour différent de celle-ci.

8. Palier d'agrégat selon l'une des revendications 1 à 7, **caractérisé en ce que** les butées élastomères (11, 12, 13) forment un corps de butée commun (4') qui encadre l'élément porteur (3) entièrement vers l'extérieur dans la position d'utilisation.

9. Palier d'agrégat selon l'une des revendications 1 à 8, **caractérisé en ce que** l'élément porteur (3) est constitué d'une matière plastique thermoplastique.
